# EUROPÄISCHE PATENTSCHRIFT

(11) **EP 2 939 523 B1**
(45) Veröffentlichungstag und Bekanntmachung des Hinweises auf die Patenterteilung: **08.05.2019**
(21) Anmeldenummer: 15164062.0
(22) Anmeldetag: 17.04.2015
(51) Int. Cl.: A01F 15/07

(54) **BALLENWICKELEINRICHTUNG UND RUNDBALLENPRESSE MIT EINER SOLCHEN**
BALE WRAPPING DEVICE AND ROUND BALER THAT IS PROVIDED WITH SAME
DISPOSITIF D'ENRUBANNAGE ET PRESSE À BALLES RONDES DOTÉE D'UN TEL DISPOSITIF

(30) Priorität: 29.04.2014 DE 102014208081
(43) Veröffentlichungstag der Anmeldung: 04.11.2015
(73) Patentinhaber: Deere & Company, Moline, IL 61265 (US)
(72) Erfinder: Gresset, Pascal, 25870 Auxon Dessous (FR); Fournier, Jean-Francois, 70100 Chargey les Gray (FR)
(74) Vertreter: Reichert, Christian

(56) Entgegenhaltungen:
- EP-A1- 0 432 830
- EP-A1- 2 113 165
- WO-A2-2005/009112
- US-A1- 2006 242 931

## Beschreibung

Die Erfindung betrifft eine Ballenwickeleinrichtung für eine Rundballenpresse, mit einer sich entlang der Breite einer Presskammer einer Ballenpresse erstreckenden Zuführeinrichtung zum Einführen von Umwicklungsmaterial in die Presskammer, wobei die Zuführeinrichtung eine auf ihrer Oberseite angeordnete Abschirmlage zur oberseitigen Abschirmung eines in die Presskammer einzuführenden freien Endes des Umwicklungsmaterials umfasst, wobei die Abschirmlage mehrere entlang der Breite der Presskammer parallel zueinander angeordnete Abschirmlippen umfasst, die sich in Richtung eines Innenraums der Presskammer erstrecken und wobei sich die Abschirmlippen, ausgehend von einem festen Ende an einer gemeinsamen, sich entlang der Breite der Presskammer erstreckenden, Abschirmlippenhalterung hin zu einem freien Ende in Richtung des Innenraums der Presskammer erstrecken. Ferner betrifft die Erfindung eine Rundballenpresse mit einer solchen.

Ballenwickeleinrichtungen für Rundballenpressen sind bekannt. Dabei wird in Rundballenpressen zu einem Rundballen geformtes Pressgut, beispielsweise landwirtschaftliches Erntegut, aber auch Papier- oder Stoffreste, mit einem Umwicklungsmaterial, beispielsweise Netz oder Folie, umwickelt. Derartige Ballenwickeleinrichtungen weisen üblicherweise eine Zuführeinrichtung zum Einführen des Umwicklungsmaterials in eine Presskammer der Rundballenpresse auf, wobei die Zuführeinrichtung in einer Zuführbewegung das Umwicklungsmaterial von einer Vorratsrolle abzieht und in eine zwischen zwei Pressrollen (oder darum geführte Pressriemen) - einer oberen und einer unteren Pressrolle (bzw. darum geführte Pressriemen) - angeordnete Zuführöffnung der Presskammer einführt.

Die US 2006/242931 A1 offenbart eine Ballenpresse mit einer Zuführeinrichtung für Umwicklungsmaterial, wobei die Zuführeinrichtung eine Vorrichtung aus zueinander vorgespannten Matten umfasst, zwischen denen das Umwicklungsmaterial geführt wird, wobei eine der Matten eine Abschirmlage für das Umwicklungsmaterial darstellt.

Eine auf der Oberseite der Zuführeinrichtung angeordnete Abschirmlage oder Abschirmmatte, schirmt das einzuführende Ende des Umwicklungsmaterials gegenüber einer oberen Pressrolle im Bereich der Zuführöffnung ab, so dass das einzuführende Umwicklungsmaterial im Bereich der Zuführeinrichtung nur von der unteren Pressrolle (bzw. dem darum geführten Pressriemen) und von dem in der Presskammer rotierenden Rundballen erfasst und transportiert wird. So kann sich das Umwicklungsmaterial nicht an der oberen Pressrolle (bzw. dem darum geführten Pressriemen) verhaken bzw. von dieser (bzw. diesem) erfasst werden, wodurch eine Mitnahme des Umwicklungsmaterials durch den Rundballen ausbleiben würde. Die Abschirmlage wird in bekannter Weise durch eine sich entlang der Breite der Presskammer erstreckende elastische Matte, beispielsweise einer Gummimatte oder Gummilippe gebildet, die sich in Richtung der Presskammer bzw. der Zuführöffnung über das Ende des Umwicklungsmaterials erstreckt, so dass die Abschirmlage zwischen der oberen Pressrolle (bzw. einem darum geführten Pressriemen) und der Zuführeinrichtung gelagert ist wodurch ein Kontakt zwischen Umwicklungsmaterial und oberer Pressrolle (bzw. einem darum geführten Pressriemen) verhindert werden soll.

Durch Wind oder sich während des Ballenpressvorgangs im Bereich der Abschirmlage ansammelndes oder dort bereichsweise sich anhaftendes Erntegut kann die Abschirmlage bereichsweise angehoben werden, wodurch es oftmals nicht ausbleibt, dass die Abschirmlage entlang der Breite der Presskammer vereinzelt in Kontakt mit der oberen Pressrolle (bzw. einem darum geführten Pressriemen) gerät und von dieser (bzw. diesem) mitgerissen wird. Dies kann wiederum zu einem Umfalten oder Umschlagen der Abschirmlage über die gesamte Breite führen und damit auch die Abschirmfunktion für das Umwicklungsmaterial beim Zuführen in die Zuführöffnung verloren gehen. Ferner kann dadurch auch ein Umfalten oder Umschlagen des freien Endes des Umwicklungsmaterials hervorgerufen werden, welches sich dadurch gegebenenfalls sogar zwischen Abschirmlage und Zuführeinrichtung festsetzen kann. Beim Austausch der Abschirmlage muss diese über ihre gesamte Breite erneuert werden.

Die der Erfindung zugrunde liegende Aufgabe wird daher darin gesehen, eine Ballenwickeleinrichtung der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine Ballenwickeleinrichtung der eingangs genannten Art eine Abschirmlippenhalterung auf, mit einer Vorrichtung, in der die Abschirmlippen einzeln eingespannt oder gehalten sind. Mit einer Abschirmlage oder Abschirmmatte der oben genannten Art, vorzugsweise aus Gummi oder einem anderen elastischen Material, wird bei Kontakt mit der Pressrolle (oder einem darum geführten Pressriemen) die Abschirmlage nur partiell, also segmentweise bzw. nur in Bezug auf die betroffene Abschirmlippe betroffen. Somit erfolgt ein Umfalten oder Umschlagen der Abschirmlage nur partiell, also segmentweise bzw. nur in Bezug auf die betroffene Abschirmlippe. Der nicht betroffene Teil der Abschirmlage bzw. die nicht betroffenen Abschirmlagensegmente können somit weiter ungehindert ihrer Funktion zum Schutz des Umwicklungsmaterials nachkommen. So können die bei der Zuführung von Umwicklungsmaterial auftretenden Probleme, insbesondere eine mangelnde oder ausbleibende Mitnahme des Umwicklungsmaterials durch den Rundballen, minimiert werden. Die Abschirmlippenhalterung umfasst eine Vorrichtung, in der die Abschirmlippen einzeln eingespannt oder gehalten sind. Diese kann beispielsweise als Spannschiene oder Klammerprofilschiene ausgebildet sein. Es ist aber auch denkbar, Verbindungslöcher oder Aussparungen an den festen Enden der Abschirmlippen und an der Abschirmlippenhalterung vorzusehen mit denen die Abschirmlippen durch Verschrauben, Vernieten oder auf andere Art in Verbindung gebracht werden können. Ein Verkleben der festen Enden mit einer profilierten Halteschiene ist ebenfalls denkbar und praktikabel. Durch eine getrennt voneinander vorgesehene Verbindung der einzelnen Abschirmlippen an der Abschirmhalterung kann segmentweise ein Austausch erfolgen, ohne die Abschirmlage über die gesamte Breite zu erneuern.

Die einzelnen Abschirmlippen bzw. Abschirmlagesegmente erstrecken sich ausgehend von einem festen Ende an einer gemeinsamen, sich entlang der Breite der Presskammer erstreckenden, Abschirmlippenhalterung hin zu einem freien Ende in Richtung des Innenraums der Presskammer erstrecken. Die Abschirmlippenhalterung kann beispielsweise durch ein sich an einem Rahmen der Zuführeinrichtung und über die Breite der Presskammer erstreckendes Bauteil in Form einer Schiene, Spannleiste, Winkelprofil, Stange etc. ausgebildet sein. An dem Bauteil können Verschraubungen, Scharniere, Nieten, Klemmverbindungen oder andere Verbindungen vorgesehen sein, mit denen die einzelnen Abschirmlippen bzw. Abschirmlagensegmente an die Zuführeinrichtung befestigt sind.

An dem der Presskammer zugewandte Ende einer Abschirmlippe bzw. eines Abschirmlagensegments ist diese bzw. dieses sich in der Breite verjüngend ausgebildet, so dass sich die Abschirmlippen an ihren freien Enden in ihrer Breite reduzieren. Dadurch entstehen abgerundete oder abgekantete Eckkonturen an den freien Enden der Abschirmlippen, wodurch ein Verhaken von Umwicklungsmaterial mit den Eckbereichen der Abschirmlippen, beispielsweise bei einem Zurückfedern nach einem Umfalten bzw. Umschlagen, verhindert werden kann oder auch einer Verformung der Eckbereiche durch Erwärmung (Sonne, Betriebstemperatur) vorgebeugt wird.

Um ein einwandfreies Zurückfedern der Abschirmlippen ohne bleibende Verformungsspuren zu gewährleisten sind die Abschirmlippen möglichst dünnschichtig und elastisch ausgebildet sein. Vorzugsweise können diese aus Gummi, einem Schaumstoffmaterial oder einem anderen elastischen bzw. unter Federkraft reversibel verformbaren Material hergestellt sein.

Die Abschirmlippen sind lösbar mit der Abschirmlippenhalterung verbunden, so dass diese bei Beschädigung oder Verschleiß von der Abschirmlippenhalterung getrennt ersetzbar bzw. austauschbar sind.

Die oben erwähnten Ausführungsformen für eine Ballenwickeleinrichtung eignet sich insbesondere für den Einsatz in einer Rundballenpresse landwirtschaftlicher Art zum Pressen von Erntegut, Schnittgut, Halmgut etc.. Es können jedoch auch andere Einsatzgebiete denkbar sein, beispielsweise im Bereich der Papierindustrie oder des Recyclings von Textilien und anderen Verbrauchsgütern. Als Umwicklungsmaterial eignet sich insbesondere Netz oder Folie, das/die zur formgetreuen Lagerung, zwecks besseren Handlings oder auch zum Schutz des Rundballens vor Witterungseinflüssen in einer oder mehreren Lagen um den Ballen gewickelt wird. Ferner erfolgt der Einsatz von Folie auch zur Lagerung des Rundballens für Silagezwecke.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer Rundballenpresse mit einer eine Zuführeinrichtung für Umwicklungsmaterial umfassenden Ballenwickeleinrichtung,
- Fig. 2: eine vergrößerte schematische Seitenansicht der Zuführeinrichtung aus Figur 1,
- Fig. 3: eine perspektivische Seitenansicht einer Abschirmlage der Zuführeinrichtung aus Figur 1 und Figur 2 in einer ersten Ausführungsform und

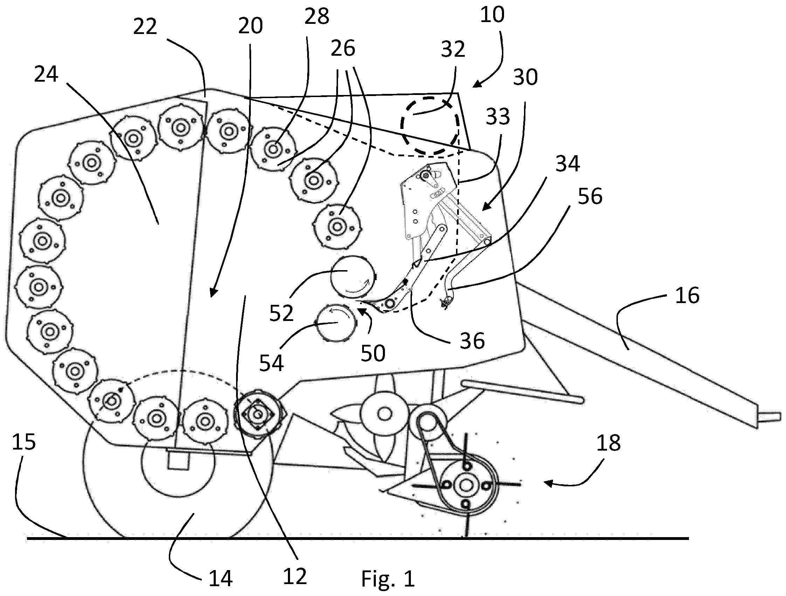

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Aufnahme- und Fördereinrichtung 18 für Erntegut, wobei der erste Gehäuseteil 12 einen vorderen Teil eines Ballenpressraums 20 umgibt. An dem rückwärtigen oberen Eckbereich des ersten Gehäuseteils 12 befindet sich ein Lager 22 für ein schwenkbares zweites Gehäuseteil 24, das einen hinteren Teil des Ballenpressraums 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen im Ballenpressraum 20 gepressten Ballen dar.

Die Rundballenpresse 10, mit größenunveränderlichem Ballenpressraum 20 ausgebildet, enthält eine Vielzahl zueinander parallel verlaufender Presselemente zum Pressen von Erntegut in Form von Pressrollen 26 (exemplarisch wurden hier nur einige wenige Pressrollen 26 mit dem Bezugszeichen "26" versehen), deren Rotationsachsen 28 bei geschlossenem zweiten Gehäuseteil 24 auf einem Kreisbogen gelegen sind, und von denen wenigstens einige angetrieben sind. Alternativ kann die Rundballenpresse 10 auch in bekannter Weise als solche mit einem größenveränderlichen Ballenpressraum 20 bzw. als Rundballenpresse 10 mit variablem Ballenpressraum 20 ausgebildet werden, wobei die Presselemente dann, ebenfalls in bekannter Weise, als Riemen, Gurte oder Kettenanordnungen (nicht gezeigt) ausgebildet sein können.

Ferner umfasst die Rundballenpresse 10 eine Ballenwickeleinrichtung 30, die mit Vorratsrolle 32 für Umwicklungsmaterial 33 bestückt ist. Als Umwicklungsmaterial kann vorzugsweise ein Netz oder auch Folie eingesetzt werden. Die Ballenwickeleinrichtung 30 umfasst eine Zuführeinrichtung 34 für das Umwicklungsmaterial 33, mittels welcher das Umwicklungsmaterial 33 von der Vorratsrolle 32 in den Ballenpressraum 20 geführt wird.

Nachdem der eigentliche Pressvorgang, also die Erntegutaufnahme und Bildung eines Rundballens durch die Pressrollen 26, abgeschlossen ist, wird eine Fahrt über den Boden 15 unterbrochen, da die Rundballenpresse 10 mit dem Rundballen gefüllt ist und kein weiteres Erntegut mehr in den Ballenpressraum 20 aufgenommen werden soll bzw. kann. Zu dieser Zeit wird auch die Ballenwickeleinrichtung 30 aktiviert, und ein sich dem Pressvorgang anschließender Umwicklungsvorgang eingeleitet. Dabei wird durch eine anhaltende Drehung des sich im Ballenpressraum 20 befindlichen Rundballens das Umwicklungsmaterial 33 um den Rundballen 20 gewickelt. Nachdem ein Umwicklungsvorgang abgeschlossen ist wird der Rundballen durch Öffnen der Auslassklappe (zweiter Gehäuseteil 24) über einer Entladerampe (nicht gezeigt) auf dem Boden 15 abgelassen. Sodann wird die Fahrt mit der Rundballenpresse 10 wieder aufgenommen und ein neuer Pressvorgang beginnt.

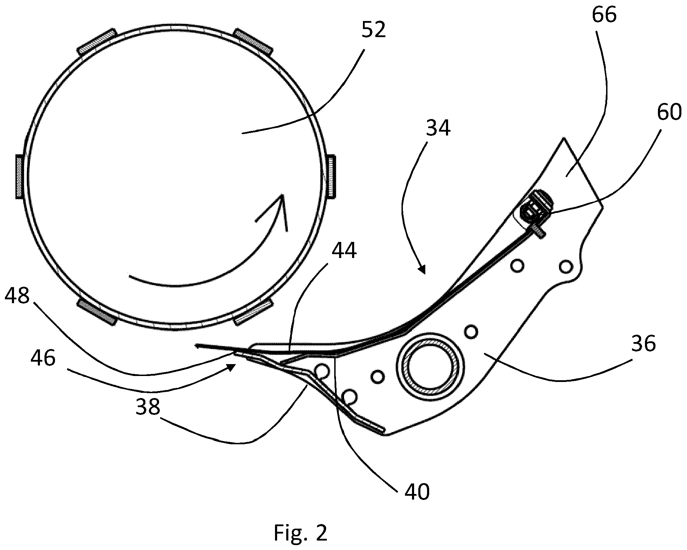

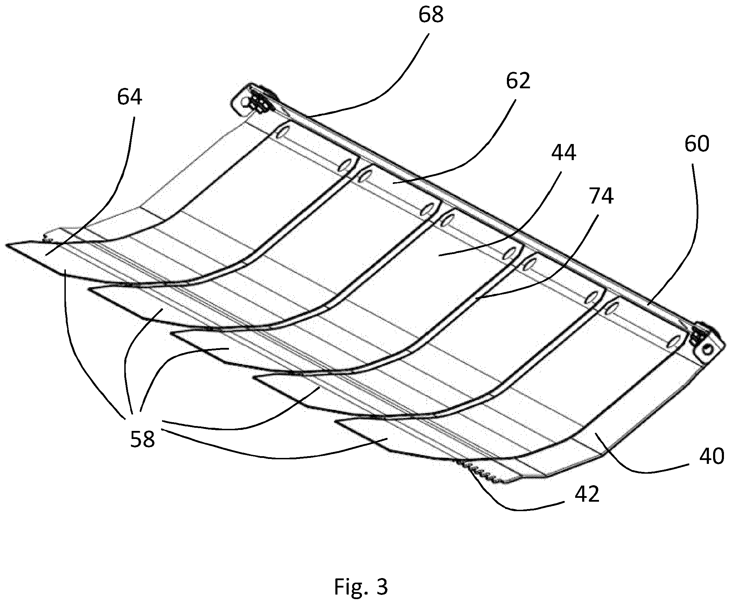

Die Zuführeinrichtung 34 ist im Detail in Figur 2 abgebildet. Sie umfasst einen schnabelartigen Zuführarm 36, der ein unteres Führungsblech 38 und ein oberes Spann- und Mitnahmeblech 40 umfasst, zwischen denen das Umwickelungsmaterial 33 hindurchführt. Durch eine voreingestellte Vorspannung drückt das Spann- und Mitnahmebleches 40 auf das Führungsblech 38, so dass das Umwicklungsmaterial eingespannt ist und bei einer Bewegung des Zuführarms 36 in Richtung der Presskammer 20 das Umwicklungsmaterial 33 von der Vorratsrolle 32 abgezogen wird. Dies wird zudem durch eine sich mit dem Umwicklungsmaterial 33 verhakende Verzahnung 42 (siehe Figuren 3 und 4) am Spann- und Mitnahmeblech 40 unterstützt, welche an einer der Presskammer zugewandten Kante des Spann- und Mitnahmebleches 40 ausgebildet ist.

Am Zuführarm 36 ist ferner auf der Oberseite des Spann- und Mitnahmeblechs 40 eine Abschirmlage 44 angeordnet, die sowohl die Oberseite des Spann- und Mitnahmeblech 40 im Wesentlichen abdeckt als auch einen der Presskammer 20 zugewandten schnabelförmigen Endbereich 46 des Zuführarms 36 und damit auch ein aus dem Endbereich 46 herausragendes Umwicklungsmaterialende 48 in Richtung der Presskammer 20 überragt und ebenfalls abdeckt bzw. abschirmt.

Ein der Zuführeinrichtung 34 zugewandter Bereich der Presskammer 20 ist mit einer Zuführöffnung 50 versehen, die durch einen Spalt, der zwischen zwei Pressrollen 52, 54, nämlich einer oberen Pressrolle 52 und einer unteren Pressrolle 54, vorgesehen ist, ausgebildet wird. Die auf der Oberseite der Zuführeinrichtung 34 angeordnete Abschirmlage 44 (oder auch Abschirmmatte), schirmt das einzuführende Umwicklungsmaterialende 48 des Umwicklungsmaterials 33 gegenüber der oberen Pressrolle 52 der Zuführöffnung 50 ab.

Bei Einleiten eines Umwicklungsvorgangs wir nun durch eine mechanisch ausgelösten Zuführbewegung des Zuführarms 36 in Richtung der Presskammer 20, insbesondere in Richtung der Zuführöffnung 50, der schnabelförmige Endbereich 36 des Zuführarms 36 an den Randbereich der Presskammer 20 geführt, so dass das freie Umwicklungsmaterialende 48 mit der unteren Pressrolle 54 der Zuführöffnung 50 oder/und mit dem sich in der Presskammer 20 rotierenden Rundballen in Berührung kommen kann und das Umwicklungsmaterial mitgerissen und aufgenommen wird. Durch Rotation des Rundballens wird das Umwicklungsmaterial 33 in ein oder mehreren Lagen um den Umfang des Rundballens gewickelt. Der Umwicklungsvorgang wird mit einem Trennvorgang (nicht gezeigt) durch eine Schneideinrichtung 56, bei dem das um den Rundballen gewickelte Umwicklungsmaterial von dem vorrätigen Umwicklungsmaterial 33 getrennt wird, abgeschlossen.

Wie aus Figur 3 hervorgeht, umfasst die Abschirmlage 44 die mehrere entlang der Breite der Presskammer
20 parallel zueinander angeordnete Abschirmlippen 58 bzw. Abschirmlagensegmente, die sich in Richtung eines Innenraums der Presskammer 20 erstrecken und mit der oben genannten Zuführbewegung des Zuführarms 36 in die Zuführöffnung 50 geführt werden. Aufgrund der geringen Spaltbreite der Zuführöffnung 50 ist es mitunter nicht unwahrscheinlich, dass sich Abschirmlage 44 bzw. die einzelnen Abschirmlippen 58 und die obere Pressrolle 52 zumindest teilweise berühren. Dies kann dazu führen, dass ein Teil der Abschirmlage 44 von der Pressrolle 54 mitgerissen und, wie bereits beschrieben, umgefaltet bzw. umgeschlagen wird. Allerdings erfolgt aufgrund der hier gewählten Ausbildung der Abschirmlage 44, nämlich durch mehrere parallel angeordnete Abschirmlippen 58, ein Umfalten oder Umschlagen der Abschirmlage 44 nur partiell, also segmentweise bzw. nur in Bezug auf die betroffene Abschirmlippe 58. Der nicht betroffene Teil der Abschirmlage 44 bzw. die nicht betroffenen Abschirmlippen 58 können somit weiter ungehindert ihrer Funktion zum Schutz des Umwicklungsmaterials 33 nachkommen. So können die bei der Zuführung von Umwicklungsmaterial 33 mit einer herkömmlichen durchgehenden bzw. ohne einzelne Abschirmlippen 58 ausgebildete Abschirmlage 44 auftretenden Probleme, insbesondere ein mit dem Umfalten oder Umschlagen der Abschirmlage 44 einhergehendes Umfalten oder Umschlagen des Umwicklungsmaterials 33 (dadurch, dass das Umwicklungsmaterial 33 freigelegt und ungeschützt der oberen Pressrolle 52 ausgesetzt wird) minimiert und eine mangelnde oder ausbleibende Mitnahme des Umwicklungsmaterials 33 durch den Rundballen vermieden werden.

Die Abschirmlage 44 bzw. die einzelnen Abschirmlippen 58 bzw. Abschirmlagesegmente sind an einer Abschirmlippenhalterung 60 befestigt, die sich entlang der Breite der Presskammer 20 erstreckt. Dabei erstrecken sich die Abschirmlippen 58 ausgehend von einem mit der Abschirmlippenhalterung 60 verbundenen festen Ende 62 hin zu einem freien Ende 64 in Richtung des Innenraums der Presskammer 20. Die Abschirmlippenhalterung 60 kann beispielsweise durch ein sich an einem Rahmen 66 der Zuführeinrichtung 34 und über die Breite der Presskammer 20 erstreckendes Bauteil 68 in Form einer Schiene, Spannleiste, Winkelprofil, Stange etc. ausgebildet sein. An dem Bauteil 68 können Verbindungen 70, wie Verschraubungen, Scharniere, Nieten, Klemmverbindungen oder andere, vorgesehen sein, mit denen die gesamte Abschirmlage 44 oder die einzelnen Abschirmlippen 58 bzw. Abschirmlagensegmente an die Zuführeinrichtung 34 befestigt ist bzw. sind.

An dem freien Ende 64 einer Abschirmlippe 58 bzw. eines Abschirmlagensegments ist diese bzw. dieses sich in der Breite verjüngend ausgebildet, so dass sich die Abschirmlippen 58 an ihren freien Enden 64 in ihrer Breite reduzieren. Dadurch entstehen abgerundete oder abgekantete Eckkonturen an den freien Enden 64 der Abschirmlippen 58.

Die auf der Zuführeinrichtung 34 angeordnete Abschirmlage 44 (oder auch Abschirmmatte) ist aus einem elastischen Material hergestellt, beispielsweise aus Gummi oder aus einem mattenförmigen verformbaren Kunststoff. Es sollte gewährleistet sein, dass das Material gewisse elastische Eigenschaften aufweist, so dass bei einem Umfalten oder Umschlagen der Abschirmlage ein selbständiges "Rückfedern" des umgefalteten bzw. umgeschlagenen Bereichs erfolgt.

Die Abschirmlippen 58 sind lösbar mit der Abschirmlippenhalterung 60 verbunden, so dass diese bei Beschädigung oder Verschleiß von der Abschirmlippenhalterung 60 getrennt ersetzbar bzw. austauschbar sind.

Wie in Figur 3 ersichtlich ist, sind die Abschirmlippen 58 einzeln in der Abschirmlippenhalterung 60 eingespannt oder gehalten. Durch eine getrennt voneinander vorgesehene Verbindung der einzelnen Abschirmlippen 58 an der Abschirmhalterung 60 kann segmentweise ein Austausch erfolgen, ohne die Abschirmlage 44 über die gesamte Breite zu erneuern.

## Patentansprüche

1. Ballenwickeleinrichtung (30) für eine Rundballenpresse (10), mit einer sich entlang der Breite einer Presskammer (20) einer Rundballenpresse (10) erstreckenden Zuführeinrichtung (34) zum Einführen von Umwicklungsmaterial (33) in die Presskammer (20), wobei die Zuführeinrichtung (34) eine auf ihrer Oberseite angeordnete Abschirmlage (44) zur oberseitigen Abschirmung eines in die Presskammer (20) einzuführenden freien Endes (48) des Umwicklungsmaterials (33) umfasst, wobei die Abschirmlage (44) mehrere entlang der Breite der Presskammer (20) parallel zueinander angeordnete Abschirmlippen (58) umfasst, die sich in Richtung eines Innenraums der Presskammer (20) erstrecken und wobei sich die Abschirmlippen (58), ausgehend von einem festen Ende (62) an einer gemeinsamen, sich entlang der Breite der Presskammer erstreckenden, Abschirmlippenhalterung (60) hin zu einem freien Ende (64) in Richtung des Innenraums der Presskammer (20) erstrecken, **dadurch gekennzeichnet, dass** die Abschirmlippenhalterung (60) eine Vorrichtung umfasst, in der die Abschirmlippen (58) einzeln eingespannt oder gehalten sind.

2. Ballenwickeleinrichtung (30) nach Anspruch 1, wobei die Abschirmlippen (58) sich an ihren freien Enden (64) in ihrer Breite reduzieren.

3. Ballenwickeleinrichtung (30) nach einem der vorhergehenden Ansprüche, **dadurch gekennzeichnet, dass** die Abschirmlippen (58) elastisch ausgebildet sind.

4. Ballenwickeleinrichtung (30) nach einem der vorhergehenden Ansprüche 2 bis 4, **dadurch gekennzeichnet, dass** die Abschirmlippen (58) lösbar mit der Abschirmlippenhalterung (60) verbunden sind.

5. Rundballenpresse(10) mit einer Ballenwickeleinrichtung (30) nach einem der vorhergehenden Ansprüche.

## Claims

1. Bale wrapping device (30) for a round baler (10), with a supply device (34) extending along the width of a baling chamber (20) of a round baler (10) for introducing wrapping material (33) into the baling chamber (20), wherein the supply device (34) comprises a shielding layer (44), which is arranged on the upper side thereof, for the upper-side shielding of a free end (48) of the wrapping material (33) that is to be introduced into the baling chamber (20), wherein the shielding layer (44) comprises a plurality of shielding lips (58) which are arranged parallel to one another along the width of the baling chamber (20) and extend in the direction of an interior of the baling chamber (20), and wherein the shielding lips (58) extend from a fixed end (62) on a common shielding lip holder (60), which extends along the width of the baling chamber, towards a free end (64) in the direction of the interior of the baling chamber (20), **characterized in that** the shielding lip holder (60) comprises an apparatus in which the shielding lips (58) are individually clamped or held.

2. Bale wrapping device (30) according to Claim 1, wherein the shielding lips (58) are reduced in their width at their free ends (64).

3. Bale wrapping device (30) according to either of the preceding claims, **characterized in that** the shielding lips (58) are elastic.

4. Bale wrapping device (30) according to one of the preceding Claims 2 to 4, **characterized in that** the shielding lips (58) are connected releasably to the shielding lip holder (60).

5. Round baler (10) with a bale wrapping device (30) according to one of the preceding claims.

## Revendications

1. Dispositif d'enrubannage (30) pour une presse à balles rondes (10), comprenant un dispositif d'alimentation (34) s'étendant le long de la largeur d'une chambre de presse (20) d'une presse à balles rondes (10) pour l'introduction de matériau d'enrubannage (33) dans la chambre de presse (20), le dispositif d'alimentation (34) comprenant une couche de protection (44) disposée sur son côté supérieur pour protéger, sur le côté supérieur, une extrémité libre (48) du matériau d'enrubannage (33) devant être introduite dans la chambre de presse (20), la couche de protection (44) comprenant plusieurs lèvres de protection (58) disposées parallèlement les unes aux autres le long de la largeur de la chambre de presse (20), lesquelles s'étendent dans la direction d'un espace interne de la chambre de presse (20) et les lèvres de protection (58) s'étendant à partir d'une extrémité fixe (62) au niveau d'une fixation de lèvres de protection commune (60) s'étendant le long de la largeur de la chambre de presse jusqu'à une extrémité libre (64) dans la direction de l'espace interne de la chambre de presse (20), **caractérisé en ce que** la fixation de lèvres de protection (60) présente un dispositif dans lequel les lèvres de protection (58) sont serrées ou retenues individuellement.

2. Dispositif d'enrubannage (30) selon la revendication 1, dans lequel les lèvres de protection (58) ont une largeur qui diminue à leurs extrémités libres (64).

3. Dispositif d'enrubannage (30) selon l'une quelconque des revendications précédentes, **caractérisé en ce que** les lèvres de protection (58) sont réalisées sous forme élastique.

4. Dispositif d'enrubannage (30) selon l'une quelconque des revendications précédentes 2 à 4, **caractérisé en ce que** les lèvres de protection (58) sont connectées de manière détachable à la fixation de lèvres de protection (60).

5. Presse à balles rondes (10) comprenant un dispositif d'enrubannage (30) selon l'une quelconque des revendications précédentes.
